# EUROPÄISCHE PATENTANMELDUNG

(11) **EP 2 216 730 A1**
(43) Veröffentlichungstag der Anmeldung: **11.08.2010**
(21) Anmeldenummer: 09001818.5
(22) Anmeldetag: 10.02.2009
(51) Int. Cl.: G06F 21/00

(54) **Verfahren zum Verschlüsseln und/oder Entschlüsseln von Personendaten**

(71) Anmelder: Deutsche Telekom AG, 53113 Bonn (DE)
(72) Erfinder: Trinkel, Martin, 52372 Kreuzau OT Untermaubach (DE)

(57) **Zusammenfassung**

Die Erfindung betrifft ein Verfahren und ein System zum Verschlüsseln und/oder Entschlüsseln von Personen-Daten, die in einem Personen-Datensatz in einer Datenbank (4) gespeichert sind / werden, bei dem mittels eines Datenerfassungsgerätes (2) von dem Körper einer Person (1) räumliche Daten von biometrischen Körpermerkmalen erfasst werden, aus den erfassten räumlichen Daten mittels einer Datenverarbeitungsanlage (2') eine Information und/oder ein Teil aus den gesamten erfassten räumlichen Daten extrahiert wird und daraus wenigstens ein Schlüssel (S1, S2) zum Verschlüsseln und/oder Entschlüsseln gebildet wird, wobei entweder mittels des wenigstens einen gebildeten Schlüssels (S1, S2) zu speichernde unverschlüsselte Daten, insbesondere die vom Datenerfassungsgerät (2) erfassten räumlichen Daten, verschlüsselt, die ursprünglich erfassten unverschlüsselten Daten gelöscht und die verschlüsselten Daten im Personen-Datensatz der Datenbank (4) gespeichert werden, oder Personen-Daten aus dem Personendatensatz der Datenbank (4) gelesen und mit dem wenigstens einen Schlüssel (S1, S2) entschlüsselt werden und zum Zugriff bereitgestellt werden.

## Beschreibung

Die Erfindung betrifft ein Verfahren und ein System zum Verschlüsseln und/oder Entschlüsseln von Personendaten, die in einem Personen-Datensatz in einer Datenbank gespeichert sind bzw. werden.

Verfahren zur Verschlüsselung oder Entschlüsselung von beliebigen Daten und damit beispielsweise auch von Personendaten sind im Stand der Technik allgemein bekannt. Solche Verfahren werden immer dann eingesetzt, wenn bestimmte Daten geheim zu halten sind und nur bestimmten Personen oder Personengruppen zugänglich gemacht werden sollen.

Dabei wird beispielsweise unterschieden zwischen sogenannten symmetrischen und asymmetrischen Verschlüsselungsverfahren, wobei bei den symmetrischen Verschlüsselungsverfahren sowohl der Versender von Daten zum Zweck der Verschlüsselung als auch der Empfänger der Daten zum Zweck der Entschlüsselung denselben Schlüssel verwenden. Bei asymmetrischen Verfahren hingegen unterscheiden sich die Schlüssel, wobei üblicherweise einer der Schlüssel ein öffentlich zugänglicher Schlüssel ist und der andere Schlüssel ein geheimer Schlüssel. Dabei wird nach dem Stand der Technik üblicherweise der Schlüssel zum Verschlüsseln der Daten öffentlich gehandhabt. Solche asymmetrischen Verfahren werden beispielsweise eingesetzt zum Verschlüsseln und Entschlüsseln von Daten bei Bankgeschäften über das Internet.

Zum Zweck des Verschlüsselns oder Entschlüsselns der Daten kann bei der vorliegenden Erfindung auf bereits im Stand der Technik vorhandene Algorithmen zugegriffen werden oder es können auch neue Algorithmen hierfür entwickelt werden. Die Ver- bzw. Entschlüsselungsalgorithmen, die grundsätzlich zur Verfügung stehen, bilden hier nicht den wesentlichen Gegenstand der Erfindung, sondern vielmehr das Bereitstellen eines entsprechenden Schlüssels. Dem Fachmann sind geläufige Algorithmen zur Durchführung der Ver- und Entschlüsselung hinlänglich bekannt, so dass weitere Ausführungen hierzu vorliegend nicht erfolgen.

Problematisch ist es gerade bei Patienten-Daten als Beispiel der eingangs genannten Personen-Daten, dass eine grundsätzlich berechtigte Person, wie z.B. ein behandelnder Arzt, auf die verschlüsselten Patientendaten zugreifen kann, sobald ihm der entsprechende, hierfür benötigte Schlüssel zur Verfügung steht. Es ist daher grundsätzlich nicht ausgeschlossen, dass es bei der Beurteilung, Bewertung oder grundsätzlich der Sichtung von verschlüsselten Daten zu Fehlern kommen kann, wenn der behandelnde Arzt beispielsweise durch Verwendung eines falschen Schlüssels einen falschen Patientendatensatz entschlüsselt und aufgrund der dann zur Verfügung stehenden Daten seine medizinische Beurteilung, beispielsweise eine Diagnose, abfasst. Solche Verwechslungen können bekanntermaßen insbesondere dann auftreten, wenn Patienten mit ähnlichem Namen durch einen Arzt behandelt werden.

Da Personenverwechslungen häufig bei der ärztlichen Diagnoseerstellung zu Missverständnissen, Verwirrungen oder gar Fehldiagnosen bezogen auf die tatsächlich betroffene Person führen, ist es die wesentliche Aufgabe der Erfindung, ein Verfahren bereit zu stellen, mit welchem solche Verwechslungen mit höherer Sicherheit vermieden werden können.

Die Aufgabe wird gemäß der Erfindung dadurch gelöst, dass bei einem gattungsgemäßen grundsätzlichen Verfahren zum Verschlüsseln und/oder Entschlüsseln von Personen-Daten, z.B. Patientendaten, die in einem Personen-Datensatz, z.B. Patientendatensatz in einer Datenbank gespeichert sind bzw. werden, mittels eines Datenerfassungsgerätes von dem Körper einer Person, z.B. eines Patienten räumliche Daten von biometrischen Körpermerkmalen erfasst werden, aus den erfassten räumlichen Daten mittels einer Datenverarbeitungsanlage eine Information und/oder ein Teil aus den gesamten erfassten räumlichen Daten extrahiert wird und daraus wenigstens ein Schlüssel zum Verschlüsseln und/oder Entschlüsseln gebildet wird, wobei es sodann zum Zweck der Verschlüsselung vorgesehen sein kann, dass mittels des gebildeten Schlüssels zu speichernde unverschlüsselte Daten, wie beispielsweise die von dem Datenerfassungsgerät erfassten räumlichen Daten oder aber auch andere Daten verschlüsselt werden und die ursprünglich unverschlüsselten Daten, beispielsweise wiederum die zuvor erfassten räumlichen und bislang unverschlüsselten Daten gelöscht und die verschlüsselten Daten in den Personen-Datensatz, z.B. Patientendatensatz der Datenbank gespeichert werden. Zum Zweck der Entschlüsselung kann es dabei vorgesehen sein, dass Personendaten aus dem Personendatensatz der Datenbank gelesen und mit dem gebildeten Schlüssel entschlüsselt werden und zum Zugriff bereitgestellt werden. Wie beschrieben kann das Verfahren bevorzugt bei Patienten als Personen eingesetzt werden.

Die Aufgabe wird auch gelöst durch ein System mit einem Datenerfassungsgerät und einer Datenverarbeitungsanlage, welche eingerichtet sind das zuvor genannte Verfahren durchzuführen.

Dieses vorbeschriebene erfindungsgemäße Verfahren hat gegenüber den im Stand der Technik bekannten Verfahren den besonderen Vorteil, dass eine grundsätzlich berechtigte Person, z.B. ein behandelnder Arzt nicht ohne Weiteres in den Besitz eines Schlüssels kommen kann, der zum Zweck der Ver- oder auch Entschlüsselung von Personendaten benötigt wird. Gemäß dem vorliegenden Verfahren ist es zwingendes Erfordernis, dass ein Schlüssel, der für die Ver- bzw. Entschlüsselung benötigt wird, durch die Person selbst bereitgestellt wird. Die Person selbst stellt quasi mit seinem Körper bzw. mit bestimmten Körpermerkmalen eine Grundlage dar, um einen Schlüssel zur Ver- oder Entschlüsselung zu bilden.

Hierfür werden gemäß der Erfindung aus räumlichen Daten, die mit einem Datenerfassungsgerät aus dem Körper einer Person gewonnen werden, ein Schlüssel zum Ver- oder Entschlüsseln gebildet wird. Dabei kann aus den räumlichen Daten entweder eine Information, die sich in diesen Daten befindet oder aber ein Teil aus den gesamten erfassten räumlichen Daten extrahiert werden, um aus diesen einen Schlüssel zu bilden.

Solche räumlichen Daten können beispielsweise gebildet werden durch die Datensätze, wie sie von räumlichen Bilderfassungsgeräten erstellt werden, wie sie in der Medizintechnik benutzt werden. Nach dem heutigen Stand der Technik können beispielsweise Magnetresonanztomografen oder Computertomografen bzw. auch Tomografen, die auf dem Prinzip der Ultraschallmessung arbeiten, solche räumlichen Daten zur Verfügung stellen. Im Wesentlichen handelt es sich bei solchen räumlichen Daten um einen Datenwert, beispielsweise eine messtechnisch erfasste Messgröße, z.B. eine Intensität in Abhängigkeit von Raumkoordinaten, z.B. X,Y,Z - Position in einem kartesischen Koordinatensystem oder auch Winkelkoordinaten etc. Koordinaten sind dabei jede Zahlenkombination die eine eindeutige Lage im Raum repräsentieren.

Dabei können als Daten zusätzlich auch die Zeit, z.B. eine Fixzeit oder Zeitdifferenz und/oder die Zeit in Bezug zur Änderung der Daten, z.B. eines Contents (beispielsweise eines Ergebnisbildes) und/oder die lokale geografische Position in globalen Netzkoordinaten (z.B. Längen- und Breitengrad) und/oder Kommunikationskennungen eines Kommunikationssystems, z.B. eine Kommunikationskennung wie CLI (Calling Line Identification), VLR (Visitor Location Register), IP-Adresse, Gerätekennung, WLAN-Kennung, RFID-Kennung zur Verschlüsselung herangezogen werden.

So wird demnach sichergestellt, dass die erfassten räumlichen Daten, die einer Schlüsselerstellung zugrunde gelegt sind, einer bestimmten Person zugeordnet sind, so dass mit dem entsprechend gebildeten Schlüssel auch nur Daten genau dieser Person verschlüsselt oder entschlüsselt werden können.

In einer besonderen Ausführungsform kann sich eine Person etwas im Kopf vorstellen, z.B. ein Bild, ein Geräusch, eine Handlung etc. Das Datenerfassungssystem zum Erfassen und/oder Bestimmen wenigstens eines biometrischen Merkmales, z.B. mittels eines Tomografen (Kemspin-Tomograf bzw. Magnetresonaztomograf, Computertomograf, Positronenemissionstomograf, Elektrischer Impedanztomograf, mobiler Tomograf) erkennt dabei die Gehimströme und erfasst ein Gehirnstrombild. Aus diesem Bild kann dann ein personenindividuelle Bild oder Muster technisch analysiert werden und als Datenschlüssel oder auch als zusätzlicher Content verwendet werden.

Dabei ist es gemäß der Erfindung vorgesehen, dass zum einen die erfassten räumlichen Daten mittels dem aus diesen gebildeten Schlüssel in den Personendatensatz eingeschrieben werden können, wobei es aber auch vorgesehen sein kann, dass andere zur Verfügung stehende unverschlüsselte Daten ebenso mit dem aus diesen erfassten räumlichen Daten gebildeten Schlüssel nach einer entsprechenden Verschlüsselung in diesen Personendatensatz gespeichert werden, Dabei kann eine Speicherung in einen vorhandenen Datensatz erfolgen oder es kann mit dem Verfahren ein Datensatz neu angelegt werden.

Der wesentliche Vorteil des Verfahrens gegenüber bisherigen Verfahren ist also darin zu erkennen, dass vor der Durchführung einer Entschlüsselung oder auch einer Verschlüsselung von Daten zunächst räumlichen Daten aus dem Körper einer Person erfasst werden müssen. Damit kann eine berechtigte Person, z.B. ein behandelnder Arzt nicht mehr, wie zuvor im Stand der Technik grundsätzlich jederzeit auf Personendaten zugreifen. Vielmehr muss die Person anwesend sein, bzw. zumindest zur Schlüsselgenerierung zur Verfügung stehen.

Um eine hohe Sicherheit weiterhin sicherzustellen, kann es verfahrensgemäß vorgesehen sein, dass der für die Verschlüsselung oder Entschlüsselung verwendete und aus den räumlichen Daten gebildete Schlüssel nach dem Vorgang einer Ver- oder auch Entschlüsselung automatisch vernichtet wird, somit also einer berechtigten Person, z.B. einem behandelnden Arzt nicht zur Verfügung steht. Soll zu einem späteren Zeitpunkt erneut eine Ver- oder Entschlüsselung vorgenommen werden, so bedarf es in dieser Ausführung zunächst der erneuten Erfassung räumlicher Daten aus dem Körper der Person, um hiermit wiederum den notwendigen Schlüssel zu bilden und die Daten zu ver- oder zu entschlüsseln.

Es kann auch vorgesehen sein, den Schlüssel zu einer späteren Verwendung zu speichern, bevorzugt in einem Speichermedium, welches eine Person mit sich führt.

Um eine hohe Sicherheit dahingehend bereitzustellen, dass bei mehrfacher Datenerfassung von räumlichen Daten von dem Körper einer Person immer wieder der gleiche bzw. derselbe Schlüssel gebildet wird, um das Verfahren der Ver- und/oder Entschlüsselung durchzuführen, ist es für das Verfahren in einer bevorzugten Ausführung wesentlich, dass nur solche Anteile aus den räumlichen Daten für die Generierung eines Schlüssels zugrunde gelegt werden, die sich als charakteristisch für eine Person, z.B. einen Patienten und/oder unveränderlich, zumindest im Wesentlichen als unveränderlich erweisen.

So ist demnach in einer bevorzugten Ausführung vorgesehen, dass aus den räumlichen Daten, wie beispielsweise 3D-Bilddaten, wenigstens eine personenindividuelle Informationen, insbesondere Koordinaten von personenindividuellen Merkmalen erfasst werden und diese wenigstens eine Information selbst den Schlüssel bildet oder der Schlüssel aus dieser wenigstens einen Information gebildet wird.

Dabei kann es vorgesehen sein, dass das Erfassen von personenindividuellen Informationen erfolgt durch einen Vergleich der räumlichen Daten der betroffenen Person mit gespeicherten räumlichen Vergleichsdaten, die z.B. in einer Vergleichsdatenbank zur Verfügung gestellt werden können, wobei z.B. Differenzen zwischen den räumlichen Daten der betroffenen Person und den Vergleichsdaten einer Person individuelle Informationen bilden.

In einer möglichen Ausführung kann also das System zuerst ein technisches Merkmal ermitteln oder einen Parameter. Im Anschluß kann ein Vergleich dieses Merkmals / Parameters erfolgen z.B. mit dem Durchschnitt der Merkmale z.B. einer repräsentativen Gruppe, beispielsweise mittels einer Verteilungsfunktion, z.B. Gaußverteilung, Poisson-Verteilung, hypergeometrische Verteilung, Gamma-Verteilung, Normal-Verteilung. Hierdurch kann z.B. festgestellt werden, ob das Merkmal selten ist oder gar einzigartig ist, beispielsweise wenn es einen bestimmten Verteilungswert unterschreitet. Ein solches Merkmal kann z.B. alleine als Schlüssel oder zur Bildung eines Schlüssels herangezogen werden. Es kann auch vorgesehen sein, weitere solcher Merkmale zu erfassen, z.B. in einer Messreihe und wie erwähnt zu vergleichen. Ein Schlüssel kann dann auch aus einigen oder allen dieser Merkmale gebildet werden.

So wird sichergestellt, dass nicht gegebenenfalls Körpermerkmale, die bei einer Vielzahl von Personen gegeben sind, der Bildung eines Schlüssels zugrunde gelegt werden, sondern nur solche Körpermerkmale (oder deren Koordinaten) einer Person, die definitiv individuell für diese Person sind. Beispielsweise kann es sich dabei bevorzugt um personenindividuelle Veränderungen und somit Abweichungen gegenüber Durchschnittspersonen bzw. der sogenannten Norm handeln. Beispielsweise kann es sich bei solchen Merkmalen um innere Vemarbungen, Knochen- oder Organpositionen oder besondere Krankheitsbilder bzw. Krankheitsmerkmale handeln.

In einer weiterhin bevorzugten Ausführungsform kann es vorgesehen sein, dass die zu verschlüsselnden Daten nicht nur mit einem Schlüssel verschlüsselt werden, der aus den erfassten räumlichen Daten oder daraus extrahierter Informationen gewonnen wurde, sondern gegebenenfalls auch mit mehreren Schlüsseln, die aus verschiedenen erfassten personenindividuellen Merkmalen gebildet werden bzw. wurden. Dabei können die jeweils zur Generierung zugrunde liegenden räumlichen Daten auch durch verschiedene Erfassungstechniken erfasst werden.

So kann beispielsweise das Ergebnis einer bildgebenden Untersuchung am Körper einer Person als personenindividuelles erstes Merkmal die speziellen Koordinaten z.B. einer körperinneren Narbe, beispielsweise aufgrund einer zurückliegenden Operation dienen, wobei als ein zweites personenindividuelles Merkmal beispielsweise die Koordinaten bzw. Position eines bestimmten Knochens oder auch mehrere Koordinaten eines solchen Knochens herangezogen werden, aus denen auf eine Lage oder Länge des Knochens geschlossen werden kann, wobei bei solchen Untersuchungsmethoden eine Vielzahl personenindividueller Merkmale erschlossen werden können, die alle jeweils für sich genommen dazu dienen können, einen Schlüssel zum Verschlüsseln oder auch zum späteren Entschlüsseln von Daten zu bilden.

Hierbei kann es vorgesehen sein, dass die Bildung eines Schlüssels aus den vorgenannten Merkmal z.B. dadurch erfolgt, dass dem Merkmal zugeordnete Zahlenwerte, wie beispielsweise Koordinaten in einem Raumkoordinatensystem oder auch andere Werte, wie Längen oder allgemein Entfernungen oder auch Gewebedichte etc. als Zahlenwerte benutzt werden können.

Es kann sodann in einem möglichen Verfahrensschritt demnach vorgesehen sein, dass die Daten jeweils mit einem oder mehreren dieser grundsätzlich zur Verfügung stehenden gebildeten Schlüsseln verschlüsselt werden, somit also die Daten in mehrfacher Ausführung jeweils mit einem dieser Schlüssel verschlüsselt zur Verfügung stehen, so dass es gegebenenfalls in einem späteren Verfahrensschritt, bei dem es auf eine Entschlüsselung ankommt, bereits ausreichend ist, einen einzigen aus der Gruppe der ursprünglich benutzten Schlüssel zu verwenden, um eine Entschlüsselung der Daten zu erzielen.

In einer anderen Ausführung kann es auch vorgesehen sein, die Daten zunächst mit einem Schlüssel zu verschlüsseln, gegebenenfalls dann auf diese verschlüsselten Daten wenigstens einen oder mehrere weitere Schlüssel zur nochmaligen weiteren Verschlüsselung anzuwenden, so dass eine spätere Entschlüsselung nur vorgenommen werden kann, wenn alle ursprünglich eingesetzten Schlüssel wiederum zur Entschlüsselung, insbesondere nacheinander herangezogen werden.

In einer bevorzugten Ausführung des Verfahrens kann es dabei vorgesehen sein, dass die Datenverarbeitungsanlage, die zur Bildung bzw. Generierung des wenigstens einen Schlüssels herangezogen wird und mittels der insbesondere auch eine Auswertung der erfassten räumlichen Daten vorgenommen werden kann, um aus diesen Daten personenindividuelle Merkmale zu identifizieren, durch einen Teil des Datenerfassungsgerätes, also beispielsweise ein MRT, CT oder Ultraschallgeräts gebildet ist.

Es kann sodann demnach direkt vor Ort in dem Erfassungsgerät auch die Schlüsselbildung vorgenommen werden, gegebenenfalls auch gleichzeitig die Verschlüsselung oder auch Entschlüsselung der jeweiligen Daten. Auch hier ist grundsätzlich darauf hinzuweisen, dass zur Bildung eines Schlüssels aus den zur Verfügung gestellten Daten grundsätzlich jegliche Art von Algorithmus zur Verwendung kommen kann, der geeignet ist zur Generierung eines Schlüssels.

In einer weiteren bevorzugten Ausbildung kann es vorgesehen sein, dass vor der Bildung eines Schlüssels für die Ver und/oder Entschlüsselung die erfassten personenindividuellen Informationen automatisch geändert werden. Diesem Verfahrensschritt liegt die Überlegung zugrunde, dass personenindividuelle Merkmale, die aus Informationen über den Körper einer Person gewonnen werden, gegebenenfalls nicht ideal konstant sind mit der Zeit, sondern gewissen Änderungen unterliegen.

Hierbei kann es sich beispielsweise um Änderungen handeln, die sich aufgrund des Alters einer Person ergeben, beispielsweise in der Wachstumsphase, wenn personenindividuelle Merkmale ursprünglich z.B. bei einem Kind aufgenommen wurden und zu einem späteren Zeitpunkt, wenn das Kind gewachsen ist oder sich im Erwachsenenalter befindet, eine Entschlüsselung vorgenommen werden soll. In einem solchen Fall werden sich zwischen personenindividuellen Merkmalen zu diesen verschiedenen weit auseinander liegenden Zeiten ggfs. Unterschiede ergeben, beispielsweise dadurch, dass sich die absoluten Koordinaten oder auch relative Größen eines personenindividuellen Merkmals im Körper der Person geändert haben.

Dabei fließt die Überlegung mit ein, dass sich derartige für das Verfahren herangezogene Merkmale, insbesondere aufgrund des Wachstums einer Person, proportional verändern, dass also beispielsweise proportionale Verhältnisse zwischen gegebenenfalls auch mehreren Koordinaten eines personenindividuellen Merkmals erhalten bleiben. So kann demnach beispielsweise durch Anwendung einer Proportionalitätsfunktion eine Transformation der aktuellen personenindividuellen Information, insbesondere von deren Koordinaten, vorgenommen werden, in die personenindividuellen Informationen insbesondere Koordinaten zu einem anderen Zeitpunkt, insbesondere einem früheren oder auch einem späteren, so dass jederzeit Ver- und Entschlüsselungen vorgenommen werden können, selbst wenn nicht der exakt identische Schlüssel aufgrund des zeitlichen auseinander Liegens der Generierung des jeweiligen Schlüssels erhalten wird.

Beispielsweise kann es erfindungsgemäß vorgesehen sein, dass nach der Generierung eines Schlüssels aus personenindividuellen Merkmalen, beispielsweise Koordinaten, zu einem aktuellen Erfassungszeitpunkt eine Datenbank mit Patientendaten durchsucht wird auf das Vorhandensein eines Datensatzes, der entweder exakt mit diesem Schlüssel entschlüsselt werden kann oder aber auf das Vorhandensein eines Datensatzes, der entschlüsselt werden könnte, wenn man auf den ermittelten bzw. gebildeten Schlüssel eine Proportionalitätsfunktion oder allgemein eine Transformationsfunktion anwendet.

Es kann dann beispielsweise eine Wahrscheinlichkeit errechnet werden, die angibt, ob es sich bei dem aufgefundenen Patientendatensatz um einen gesuchten Datensatz zur betroffenen Person handelt. Gegebenenfalls kann die Datenverarbeitungsanlage, die eine solche Berechnung durchführt, auf eine entsprechende Eingabe eines Nutzers bzw. Arztes warten, der bestätigt, dass es sich um den Datensatz zu der gesuchten bzw. aktuell in seiner Praxis vorhandenen Person handelt. Eine solche Eingabe kann z.B. erwartet werden, wenn eine bestimmte Mindestwahrscheinlichkeit vorliegt. Anderenfalls kann es vorgesehen sein, den Schlüssel für ungültig zu qualifizieren. Sodann kann ggfs. eine entsprechende Entschlüsselung dieser Daten und Bereitstellung für den Arzt erfolgen.

Insgesamt kann es bei der Anmeldung des erfindungsgemäßen Verfahrens vorgesehen sein, dass gewisse Unschärfen des Schlüssels berücksichtigt werden, dass also beispielsweise zum Zweck der Entschlüsselung es nicht notwendig ist, dass ein aus personenindividuellen Merkmalen gebildeter Schlüssel exakt mit demjenigen Schlüssel übereinstimmt, der ursprünglich zur Verschlüsselung benutzt wurde, sondern dass Abweichungen in einem Toleranzbereich möglich sind, um Ver- und Entschlüsselungen vorzunehmen. Hierdurch wird allgemein der Situation vorgebeugt, dass sich eventuell bei zeitlich auseinander liegenden Erfassungen von räumlichen Daten aus dem Körper einer Person gewisse Unterschiede gegebenenfalls nicht vermeiden lassen.

In einer weiteren erfindungsgemäßen Ausgestaltung kann es auch vorgesehen sein, dass die erfassten räumlichen Daten oder die mittels einer Datenverarbeitungsanlage aus diesen extrahierten Informationen und/oder der aus den gesamten erfassten räumlichen Daten extrahierte Teil vor der Bildung eines Schlüssels, sei es zur Ver- oder zur Entschlüsselung, noch verknüpft wird mit einer Information über den Aufenthaltsort der Person oder aber es wird der gebildete Schlüssel zusammen mit einer Information über den Aufenthaltsort der Person für die Entschlüsselung und/oder Verschlüsselung verwendet. In einer Ausführung kann eine Information über den Aufenthaltsort der Person auch einen separaten Schlüssel direkt bilden oder es kann daraus ein Schlüssel generiert werden, der zusätzlich zum vorher beschriebenen Schlüssel aus den räumlichen Daten angewendet wird.

Dieser weitere Verfahrensschritt führt zu einer noch größeren Sicherheit, dass eine berechtigte Person, z.B. ein Arzt nicht ohne das persönliche Erscheinen einer Person, z.B. des Patienten Zugriff erhält auf die verschlüsselten Daten.
Beispielsweise kann es sich um eine Information handeln, die besagt, dass sich die Person aktuell, d.h. zum Zeitpunkt der gewünschten Ver- oder Entschlüsselung, in einer bestimmten Lokalität, z.B. der Praxis des Arztes befindet.

Eine solche Information über den Aufenthaltsort der Person kann beispielsweise gewonnen werden aus der Erfassung des Ortes eines elektronischen Gerätes, insbesondere Kommunikationsgerätes, welches der Patient mit sich führt. Hier kann sich das Verfahren erfindungsgemäßer Art zunutze machen, dass heutzutage nahezu jeder Mensch ein mobiles elektronisches Gerät, z.B. Kommunikationsgerät, wie beispielsweise ein Mobiltelefon, mit sich führt.

Dabei kann das mobile elektronische Gerät auch allgemein ein technisches System und/oder Metriksystem sein, z.B. ein aktives oder passives Sensorsystem, z.B. RFID, Markierungschip, markierte Nanopartikel, welches im und/oder am Körper und/oder im Bereich der Person von dieser mitgeführt z.B. getragen wird. Ein solches System kann auch als zuvor genannter Speicher bzw. als Speichermedium dienen zur zumindest zeitweisen Speicherung des Schlüssels.

Bekannterweise können solche Kommunikationsgeräte örtlich lokalisiert werden, so dass die Möglichkeit besteht, den Ort des Kommunikationsgerätes im Funknetz und somit auch den Ort des Patienten zu ermitteln. Beispielsweise kann dies dadurch erfolgen, dass der Aufenthaltsort bestimmt wird durch die Feststellung der Funkzelle, in welcher sich ein vom Patienten mitgeführtes Mobiltelefon befindet. Dabei ist gerade in Ballungszentren davon auszugehen, dass eine Lokalisationsbesfimmung auf wenige 10 oder wenige 100 Meter genau durchgeführt werden kann. Es ist also immer von einer sehr hohen Wahrscheinlichkeit auszugehen, dass sich der Patient in der Praxis des Arztes befindet, wenn das Mobiltelefon des Patienten sich in der Funkzelle befindet, in der sich auch die Arztpraxis befindet.

Es kann sodann beispielsweise vorgesehen sein, dass eine Entschlüsselung durchgeführt wird, wenn die bei der Verschlüsselung gespeicherte Ortsinformation übereinstimmend ist mit einer vor der Entschlüsselung ermittelten aktuellen Ortsposition oder der aus der Ortsinformation gebildete weitere Schlüssel identisch ist mit dem vorherigen benutzten auf der Ortsinfomation beruhenden Schlüssel. Ansonsten kann beispielsweise eine Entschlüsselung der Daten verweigert werden bzw. auch eine Verschlüsselung und damit Hinzufügung weiterer Daten in den Personendatensatz.

In einer Ausführungsform kann der Schlüssel auch für andere Dokumente oder Daten verwendet werden, z.B. zum Verschlüsseln von Daten oder Content derart, dass z.B. beim Eintritt in eine bestimmte Lokalität, z.B. Klinik, Räumlichkeit, Schleuse, Sensorik die Person gescannt wird, z.B. im Rahmen einer Sicherheitskontrolle, Hierfür kann das vorbeschriebene Verfahren / System genutzt werden zur Bestimmung eines personenindividuellen Merkmals, welches einer Schlüsselgenerierung zugrunde liegt. Dieses Merkmal oder der bereits generierte Schlüssel kann dann übertragen werden, z.B. mittels Funk oder körperlich mit einer Karte auf ein Speichermedium, das die Person mit sich führt und welches z.B. zuvor beschrieben wurde. Das Speichermedium kann beispielsweise ein RFID, Chipsystem, ein implantiertes Medium, eine virtuelle Datenbank, ein Datenspeicher /Datenbank in einem Telekommunikationsnetzwerk, ein virtuelles Netz, markierte (z.B. optisch, Barcode, elektrisch, elektronisch, magnetisch, chemisch, radioaktiv) Partikel, z.B. Nanopartikel (z.B. auf einem Trägermaterial, Moleküle) im und/oder am Körper der Person sein.

Nanopartikel können z.B. 1 bis 10 Mikrometer groß sein, z.B. aus Halbleitermaterial und deren Verbindungen, z.B. der II bis VI Hauptgruppe, zu Halbmetallen gehörende Elemente, Eisenoxide, Siliziumdioxid, Titan, Silber Aluminium.

Es können dann andere Daten mit diesem Schlüssel verschlüsselt oder entschlüsselt werden und die Person hat den passenden Schlüssel immer bei sich, zumindest zeitweise, insbesondere während des Aufenthalts in der besagten Lokalität. Es kann dabei vorgesehen sein, beim Verlassen der Lokalität den Schlüssel im Speichermedium zu löschen.

In einer weiteren Ausführung kann ein Schlüssel auch als Identitätsschlüssel zur Bestimmung oder Ermittlung einer Person verwendet werden.

Schematisch dargestellte Ausführungsbeispiele der Erfindung zeigen die Figuren:
Figur 1: eine Ausführung ohne zusätzliche Lokalisation
Figur 2: eine Ausführung mit zusätzlicher Lokalisation.

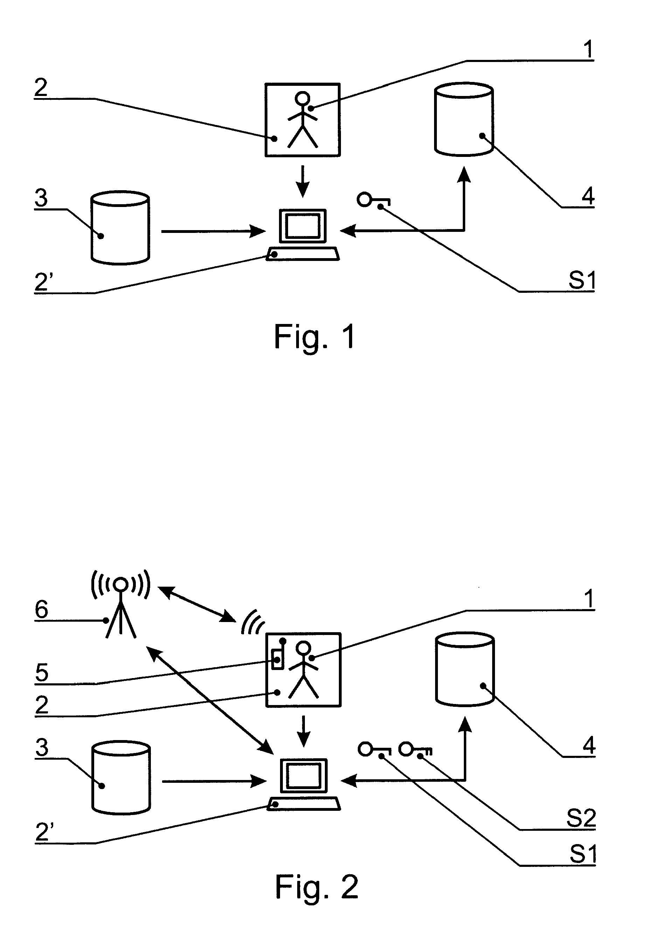

Erkennbar ist hier in der Figur 1, dass ein Patient 1 sich beispielsweise in einem Erfassungsgerät 2 (z.B. Magnetresonaztomograf - MRT) befindet zur Erfassung von Bilddaten aus dem Körper bzw. des Körpers des Patienten. Die räumlichen Bilddaten können dabei in mehreren Schichten von flächigen Daten erfasst werden.

Die mit dem Erfassungsgerät 2 erfassten Daten räumlicher Art, wie beispielsweise Messwerte in Abhängigkeit von Raumkoordinaten, werden übertragen in eine Datenverarbeitungsanlage 2', die hier symbolisiert getrennt dargestellt ist, jedoch beispielsweise intern in dem Erfassungsgerät 2 vorhanden sein kann. Die Datenverarbeitungsanlage 2' kann aus dem bereitgestellten räumlichen Daten personenindividuelle Informationen ausfiltern, beispielsweise durch einen Vergleich mit Vergleichsdaten, welche die Datenverarbeitungsanlage 2' durch Zuspielung von Vergleichsdaten aus einer Datenbank 3 erhält bzw. darauf Zugriff hat. Auch eine solche Vergleichsdatenbank kann beispielsweise innerhalb des Erfassungsgerätes 2 oder auch extern in einem Telekommunikationsnetzwerk vorhanden sein.

Nach Extraktion personenindividueller Informationen oder zumindest einer einzigen personenindividuellen Information kann aus dieser bzw. aus den diese Informationen repräsentierenden Zahlenwerten in der Datenverarbeitungsanlage 2' ein Schlüssel S1 gebildet werden, mit dem eine Verschlüsselung der erfassten räumlichen Daten oder auch jeglicher anderer beliebiger zusätzlicher Daten erfolgen kann, die beispielsweise ein Arzt in eine Datenverarbeitungsanlage eingibt oder die durch sonstigen Zugriff, z.B. auf andere Datenbanken, bereit gestellt sind. Nach der Verschlüsselung dieser Daten werden die ursprünglichen unverschlüsselten Daten gelöscht und die verschlüsselten Daten können in eine Datenbank 4 eingeschrieben werden, in welcher der Patientendatensatz gespeichert ist. Auch hier kann es wieder vorgesehen sein, dass die Datenbank 4 intern im Erfassungsgerät 2 oder der Datenverarbeitungsanlage 2' vorgesehen ist oder aber auch extern in einem Telekommunikationsnetz, über welches Zugriff auf diese Datenbank erfolgt.

Es können so in ersten Verfahrensschritten beispielsweise Patientendaten in die Datenbank 4 eingeschrieben werden.

Der umgekehrte Weg wird bei der Entschlüsselung der Daten vorgenommen, bei der jedoch, wie beim ursprünglichen Verfahren zunächst räumliche Daten mittels des Datenerfassungsgerätes 2 vom Körper des Patienten 1 erfasst werden und wiederum aus diesen, wie vorbeschrieben, ein Schlüssel S1 generiert wird. Es kann sodann mit Hilfe dieses Schlüssels S1 die aus der Datenbank 4 ausgelesenen Daten entschlüsselt werden, um sodann die entschlüsselten Daten dem Arzt zur Verfügung zu stellen.

Die Figur 2 zeigt eine Weiterbildung der Ausführung nach Figur 1 mit ansonsten gleichen Merkmalen. Hier wird die Ortsposition eines Mobiltelefons 5, welches der Patient 1 mit sich führt bestimmt. Z.B. kann eine Kommunikationsverbindung zwischen Mobiltelefon 5 und einem Funkmast 6 aufgebaut werden. Bei der Kommunikation kann geprüft werden, ob es sich um einen Funkmast handelt, in dessen Funkzelle auch die Arztpraxis liegt. Eine dies bestätigenden oder eben nicht bestätigende Information und/oder die Ortinformation selbst kann dann beispielsweise an die Datenverarbeitungsanlage 2' kommuniziert werden, welche bei positiver Bestätigung oder korrekter Ortinformation, d.h. Übereinstimmung der Funkzellen von Mobiltelefon und Arztpraxis diese Ortsinformation verwendet zum Zweck der Ver- oder Entschlüsselung, z.B. als zusätzlichen Schlüssel S2 oder als eine Information die alternativ in die Generierung des Schlüssel S1 mit einfließt.

Die Kommunikationsverbindung, mittels welcher diese vorgenannte Prüfung ausgeführt wird, kann z.B. durch die Datenverarbeitungsanlage 2' initiiert werden, z.B. dadurch, dass das Mobiltelefon angerufen wird, beispielsweise mittels einer Servicerufnummer, welche einen Lokalisationsdienst im Telekommunikationsnetzwerk startet.

Sämtliche hier zu Patienten und Ärzten genannten Merkmale gelten ebenso allgemein für beliebige Personen und berechtigte Personen, die Zugriff auf Daten dieser beliebigen Personen erwünschen.

## Patentansprüche

1. Verfahren zum Verschlüsseln und/oder Entschlüsseln von Personen-Daten, die in einem Personen-Datensatz in einer Datenbank (4) gespeichert sind / werden, **dadurch gekennzeichnet, dass** mittels eines Datenerfassungsgerätes (2) von dem Körper einer Person (1) räumliche Daten von wenigstens einem biometrischen Körpermerkmal erfasst werden, aus den erfassten räumlichen Daten mittels einer Datenverarbeitungsanlage eine Information und/oder ein Teil aus den gesamten erfassen räumlichen Daten extrahiert wird und daraus wenigstens ein Schlüssel (S1, S2) zum Verschlüsseln und/oder Entschlüsseln gebildet wird, wobei
a. entweder mittels des wenigstens einen gebildeten Schlüssels (S1, S2) zu speichernde unverschlüsselte Daten, insbesondere die vom Datenerfassungsgerät (2) erfassten räumlichen Daten, verschlüsselt, die ursprünglich erfassten unverschlüsselten Daten gelöscht und die verschlüsselten Daten im Personen-Datensatz der Datenbank (4) gespeichert werden,
b. oder Personen-Daten aus dem Personen-Datensatz der Datenbank (4) gelesen und mit dem wenigstens einen Schlüssel (S1, S2) entschlüsselt werden und zum Zugriff bereitgestellt werden.

2. Verfahren nach Anspruch 1, **dadurch gekennzeichnet, dass** aus den räumlichen Daten, insbesondere 3D-Bilddaten, wenigstens eine personenindividuelle Information, insbesondere Koordinaten erfasst werden und diese wenigstens eine Information selbst den Schlüssel (S1, S2) bildet oder der Schlüssel (S1, S2) aus dieser wenigstens einen Information gebildet wird.

3. Verfahren nach Anspruch 2, **dadurch gekennzeichnet, dass** das Erfassen von personenindividuellen Information erfolgt durch Vergleich der räumlichen Daten der Person(1) mit gespeicherten räumlichen Vergleichsdaten-Daten, insbesondere wobei Differenzen zwischen den räumlichen Daten der Person (1) und den Vergleichsdaten eine personenindividuelle Information bilden.

4. Verfahren nach einem der vorherigen Ansprüche 2 oder 3, **dadurch gekennzeichnet, dass** die Daten mit mehreren Schlüsseln (S1, S2) verschlüsselt werden, die aus verschiedenen erfassten personenindividuellen Merkmalen gebildet werden/wurden.

5. Verfahren nach einem der vorherigen Ansprüche, **dadurch gekennzeichnet, dass** ein Schlüssel (S1, S2) als Identifikationsmerkmal verwendet wird.

6. Verfahren nach einem der vorherigen Ansprüche, **dadurch gekennzeichnet, dass** die Datenverarbeitungsanlage (2') durch einen Teil des Datenerfassungsgerätes (2) gebildet ist.

7. Verfahren nach einem der vorherigen Ansprüche 2 bis 5, **dadurch gekennzeichnet, dass** vor der Bildung eines Schlüssels (S1, S2) für die Ver- und/oder Entschlüsselung, die erfassten personenindividuellen Informationen automatisch geändert werden, insbesondere zur Berücksichtigung von zeitlich bedingten Veränderungen der personenindividuellen Informationen zwischen dem Zeitpunkt der Erfassung zur Datenverschlüsselung und der Erfassung zur Datenentschlüsselung.

8. Verfahren nach Anspruch 6, **dadurch gekennzeichnet, dass** die automatische Änderung erfolgt durch Anwendung einer Proportionalitätsfunktion mittels welcher die erfassten personenindividuellen Informationen, insbesondere Koordinaten, mit wenigstens einem Proportionalitätsfaktor skaliert werden.

9. Verfahren nach einem der vorherigen Ansprüche, **dadurch gekennzeichnet, dass** die Erfassung der räumlichen Daten mittels eines Magnetresonanztomographen, Computertomografen oder Ultraschalltomografen erfolgt.

10. Verfahren nach einem der vorherigen Ansprüche, **dadurch gekennzeichnet, dass** die erfassten räumlichen Daten, die mittels einer Datenverarbeitungsanlage (2') aus diesen extrahierte Information und/oder der aus den gesamten erfassten räumlichen Daten extrahierte Teil vor der Bildung des Schlüssels (S1, S2) verknüpft wird mit einer Information über den Aufenthaltsort der Person (1) oder der gebildete Schlüssel (S1, S2) zusammen mit einer Information über den Aufenthaltsort der Person (1) für die Entschlüsselung und/oder Verschlüsselung verwendet wird.

11. Verfahren nach Anspruch 9, **dadurch gekennzeichnet, dass** eine Information über den Aufenthaltsort der Person (1) gewonnen wird aus der Erfassung des Ortes eines Kommunikationsgerätes (5) und/oder Sensors und/oder Speichers, welches/welchen die Person (1) mit sich führt.

12. Verfahren nach Anspruch 10, **dadurch gekennzeichnet, dass** der Aufenthaltsort bestimmt wird durch die Feststellung der Funkzelle, in welcher sich ein von der Person (1) mitgeführtes Mobiltelefon befindet.

13. Verfahren nach einem der vorherigen Ansprüche 9 bis 11, **dadurch gekennzeichnet, dass** ein Entschlüsselurig durchgeführt wird, wenn die bei der Verschlüsselung gespeicherte Ortsinformation übereinstimmend ist mit einer vor der Entschlüsselung ermittelten aktuellen Ortsinformation.

14. System zum Verschlüsseln und/oder Entschlüsseln von Personen-Daten, die in einem Personen-Datensatz in einer Datenbank gespeichert sind /werden, **dadurch gekennzeichnet, dass** es ein Datenerfassungsgerät (2) umfasst, welches eingerichtet ist, von dem Körper einer Person (1) räumliche Daten von wenigstens einem biometrischen Körpermerkmal zu erfassen sind und eine Datenverarbeitungsanlage (2') umfasst, die eingerichtet ist, aus den erfassten räumlichen Daten eine Information und/oder einen Teil aus den gesamten erfassten räumlichen Daten zu extrahieren und daraus wenigstens einen Schlüssel (S1, S2) zum Verschlüsseln und/oder Entschlüsseln zu bilden, und
a. entweder mittels des wenigstens einen gebildeten Schlüssels (S1, S2) zu speichernde unverschlüsselte Daten, insbesondere die vom Datenerfassungsgerät (2) erfassten räumlichen Daten, zu verschlüsseln, die ursprünglich erfassten unverschlüsselten Daten zu löschen und die verschlüsselten Daten im Personen-Datensatz der Datenbank (4) zu speichern,
b. oder Personen-Daten aus dem Personen-Datensatz der Datenbank (4) zu lesen, mit dem wenigstens einen Schlüssel (S1, S2) zu entschlüsseln und zum Zugriff bereitzustellen.

15. System nach Anspruch 14, **dadurch gekennzeichnet, dass** es ein Speichermedium umfasst, mittels dem der wenigstens eine generierte Schlüssel speicherbar ist, insbesondere wobei das Speichermedium durch markierte Nanopartikel gebildet ist.
